# EUROPEAN PATENT SPECIFICATION

(11) **EP 3 104 443 B1**
(45) Date of publication and mention of the grant of the patent: **26.04.2017**
(21) Application number: 16173471.0
(22) Date of filing: 08.06.2016
(51) Int. Cl.: H01M 8/0606, H01M 8/0432, H01M 8/04664, H01M 8/04701, H01M 8/04746, H01M 8/04302, H01M 8/04225, H01M 8/124

(54) **FUEL CELL SYSTEM**
BRENNSTOFFZELLENSYSTEM
SYSTÈME DE PILE À COMBUSTIBLE

(30) Priority: 10.06.2015 JP 2015117561
(43) Date of publication of application: 14.12.2016
(73) Proprietor: AISIN SEIKI KABUSHIKI KAISHA, Kariya-shi, Aichi 448-8650 (JP)
(72) Inventor: GOTO, Shunsuke, Kariya-shi, Aichi 448-8650 (JP); FUNATSU, Yoshinori, Kariya-shi, Aichi 448-8650 (JP); ICHIKAWA, Masaki, Kariya-shi, Aichi 448-8650 (JP); TSUKADA, Yasunori, Nagoya-shi, Aichi 450-0003 (JP); FUKUSHIMA, Akira, Kariya-shi, Aichi 448-8650 (JP)
(74) Representative: TBK

(56) References cited:
- JP-A- 2008 010 369
- JP-A- 2008 135 268
- JP-A- 2008 135 284
- JP-A- 2009 037 888
- JP-A- 2011 096 595

## Description

### TECHNICAL FIELD

This disclosure relates to a fuel cell system.

### BACKGROUND DISCUSSION

There is a fuel cell system disclosed in JP 2008-135268 A (Reference 1) as a type of a known fuel cell system. As illustrated in Fig. 1 of Reference 1, the fuel cell system includes a fuel cell 4a into which fuel gas and oxygen containing gas are supplied and which generates an electric power, a heater 7 which fires up fuel gas for combustion (combustible gas), and a temperature sensor 8 which detects a temperature of a combustion region F (combustion unit). In a case where a temperature of the combustion unit is increased from a temperature T0 of the combustion unit before being fired up by a temperature greater than or equal to a predetermined temperature T1 within a predetermined firing up determination time t0 after a firing-up operation with respect to the combustible gas by the heater 7 is performed during a start up operation, the fuel cell system of Reference 1 determines that the combustion unit is fired up. If the combustion unit is not able to be determined as being fired up within the firing-up determination time t0, the fuel cell system of Reference 1 determines that the combustion unit is in a non-firing up state and continues startup processing.

However, in the fuel cell system of Reference 1 described above, in a case where the heater 7 performs the firing-up operation, the temperature of the combustion unit is increased even in a case where the combustion unit is in a non-firing up state. Therefore, although the combustion unit is in a non-firing up state, the combustion unit may be erroneously determined as being in a firing up state.

JP 2009-037888 A (Reference 2) discloses a fuel cell system that determines, during a startup operation of the fuel cell system, that a combustion unit is fired up based on a temperature of a catalyst in a reforming unit.

JP 2011-096595 A (Reference 3) discloses fuel cell system that determines, during a startup operation of the fuel cell system, that a combustion unit is fired up based on a temperature variation in the combustion unit.

### SUMMARY

A need exists for a fuel cell system which reliably determines, during a startup operation of the fuel cell system, that a combustion unit is fired up.

A fuel cell system according to an aspect of this disclosure includes the features defined in claim 1.

According to this configuration, the first temperature sensor is arranged in the combustion unit and the second temperature sensor is arranged in the inside of at least one of the evaporating unit which is heated by the combustion unit and the reforming unit, and each temperature sensor detects a temperature of a location where each temperature sensor is arranged. The firing up determination unit determines whether the combustion unit is fired up or not, on the basis of the detection temperatures of the first temperature sensor and the second temperature sensor that are arranged at different portions during the startup operation of the fuel cell system. Therefore, it is possible to reliably determine that the combustion unit is fired up.

Further aspects of this disclosure are defined in the dependent claims.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram illustrating a first embodiment of a fuel cell system disclosed here;
Fig. 2 is a plan view of an evaporating unit and a reforming unit illustrated in Fig. 1;
Fig. 3 is a plan view of a fuel cell device illustrated in Fig. 1;
Fig. 4 is a cross-sectional view of the fuel cell device taken along IV - IV line illustrated in Fig. 3;
Fig. 5 is a block diagram of the fuel cell system illustrated in Fig. 1;
Fig. 6 is a flowchart of a program executed by a control device illustrated in Fig. 1;
Fig. 7 is a time chart illustrating operations of the fuel cell system in the flowchart illustrated in Fig. 6;
Fig. 8 is a schematic diagram illustrating a second embodiment of a fuel cell module disclosed here; and
Fig. 9 is a schematic diagram illustrating a third embodiment of a fuel cell module disclosed here.

### DETAILED DESCRIPTION

### (First Embodiment)

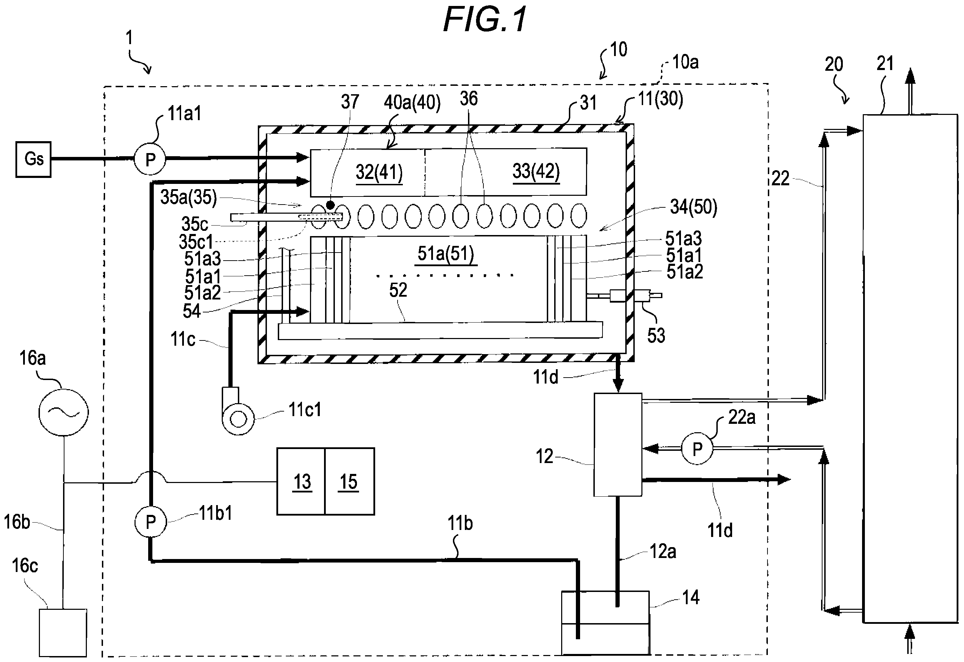

Hereinafter, an embodiment of a fuel cell system disclosed here will be described. Fig. 1 is a schematic diagram illustrating an outline of the fuel cell system 1. The fuel cell system 1 includes a power generation unit 10 and a hot water storage tank 21.

The power generation unit 10 includes a case 10a, a fuel cell module 11 (30), a heat exchanger 12, an inverter device 13, a water tank 14, and a control device 15. The fuel cell module 11 (30), the heat exchanger 12, the inverter device 13, the water tank 14, and the control device 15 are accommodated in the case 10a.

The fuel cell module 11 is configured to include at least a fuel cell device 34 (50) which will be described later. Reforming raw material, reforming water, and cathode air are supplied to the fuel cell module 11. Specifically, the fuel cell module 11 is connected to the other end of the reforming raw material supply pipe 11 a of which one end is connected to a supply source Gs to be supplied with the reforming raw material. The reforming raw material supply pipe 11a is provided with a raw material pump 11a1. Furthermore, the fuel cell module 11 is connected to the other end of a water supply pipe 11 b of which one end is connected to the water tank 14 to be supplied with the reforming water. The water supply pipe 11 b is provided with a reforming water pump 11 b1. The fuel cell module 11 is connected to the other end of a cathode air supply pipe 11c of which one end is connected to a cathode air blower 11c1 to be supplied with cathode air.

The heat exchanger 12 is a heat exchanger to which combustion exhaust gas discharged from the fuel cell module 11 and stored hot water from a hot water storage tank 21 are supplied and in which heat exchange is performed between the combustion exhaust gas and the stored hot water. Specifically, the hot water storage tank 21 stores hot water and is connected with a stored hot water circulation line 22 in which the stored hot water is circulated (circulated in a direction denoted by an arrow in the figure). A stored hot water circulating pump 22a and a heat exchanger 12 are arranged on the stored hot water circulation line 22 in this order from a lower end toward an upper end.

The heat exchanger 12 is connected with (penetrated through with) an exhaust pipe 11d extending from the fuel cell module 11. The heat exchanger 12 is connected with a condensed water supply pipe 12a connected to the water tank 14. In the heat exchanger 12, the combustion exhaust gas from the fuel cell module 11 is introduced into the heat exchanger 12 through the exhaust pipe 11d, subjected to the heat exchange with the stored hot water, condensed, and cooled down. The combustion exhaust gas after the condensation is discharged to the outside through the exhaust pipe 11d. The condensed water is supplied to the water tank 14 through the condensed water supply pipe 12a. In the water tank 14, the condensed water is purified by ion exchange resin.

An exhaust heat recovery system 20 is constituted with the heat exchanger 12 described above, the hot water storage tank 21, and the stored hot water circulation line 22. The exhaust heat recovery system 20 recovers the exhaust heat of the fuel cell module 11 into the stored hot water to be accumulated.

The inverter device 13 receives a DC voltage which is output from the fuel cell device 34 as an input, converts the input DC voltage into a predetermined AC voltage, and outputs the predetermined AC voltage through a power supply line 16b connected to an AC system power source 16a and an external electric power load 16c (for example, electrical products). The inverter device 13 receives the AC voltage from the system power source 16a through the power supply line 16b as an input, converts the input AC voltage into a predetermined DC voltage, and outputs the predetermined DC voltage to an auxiliary machine (each pump, blower, or the like) and the control device 15. The control device 15 drives the auxiliary machine to control the operation of the fuel cell system 1.

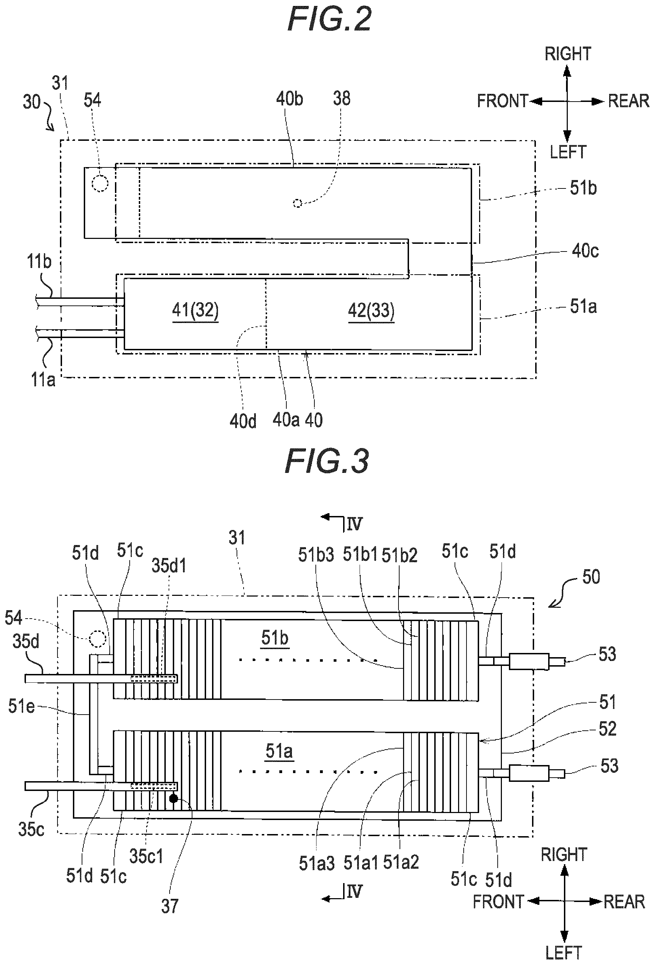

The fuel cell module 11 (30) is a solid oxide fuel cell module. The fuel cell module 30 includes a casing 31, an evaporating unit 32, a reforming unit 33, a fuel cell device 34, and a combustion unit 35. For the convenience of description in the present specification, description will be made on the assumption that an upper side and a lower side in Fig. 1 are the above and the below of the fuel cell module 30, respectively, and similarly, the left side and the right side are the front and the rear of the fuel cell module 30, respectively, and the front side and the inner side of a paper surface are the left side and the right side of the fuel cell module 30, respectively. Respective directions are illustrated by arrows in Fig. 2 to Fig. 4, Fig. 8 and Fig. 9.

The casing 31 is formed of insulating material in a box shape. The evaporating unit 32 and the reforming unit 33 are arranged to be located above the fuel cell device 34.

The other end of the reforming raw material supply pipe 11 a and the other end of the water supply pipe 11 b are connected to the evaporating unit 32. The evaporating unit 32 is heated by combustion gas to be described later, evaporates the condensed water supplied as reforming water from the water tank 14 through the water supply pipe 11 b, and produces water vapor (reforming water vapor), and leads out the water vapor. The evaporating unit 32 preheats the reforming raw material supplied through the reforming raw material supply pipe 11a. The evaporating unit 32 mixes the water vapor (reforming water vapor) generated by evaporating the reforming water (condensed water) and the preheated reforming raw material to be led out to the reforming unit 33. The reforming raw material includes natural gas, a reforming gas fuel such as LPG, and a reforming liquid fuel such as kerosene, gasoline, methanol, or the like, and description will be made on natural gas in the embodiment disclosed here.

The reforming unit 33 generates reforming gas from the reforming raw material and the water vapor (reforming water vapor). Specifically, the reforming unit 33 generates reforming gas from the mixed gas (reforming raw material and reforming water vapor) supplied from the evaporating unit 32 and leads out the reforming gas by being supplied with heat required for a reforming reaction of water vapor heated by the combustion gas to be described later. The reforming unit 33 is filled with the catalyst (for example, Ru or Ni based catalyst) and in the reforming unit 33, mixed gas is reacted by the catalyst to be reformed and hydrogen gas and carbon monoxide gas are generated (so-called water vapor reforming reaction). At the same time, a so-called carbon monoxide shift reaction, in which the carbon monoxide gas and the water vapor, that are generated by the water vapor reforming reaction, are reacted with each other and respectively converted into hydrogen gas and carbon dioxide gas, occurs. The gas (reforming gas) generated as described above is led out to the fuel cell device 34. The reforming gas contains hydrogen, carbon monoxide, carbon dioxide, water vapor, unreformed natural gas (methane gas), and the reforming water (water vapor) not used for reforming. The water vapor reforming reaction is an endothermic reaction and the carbon monoxide shift reaction is an exothermic reaction.

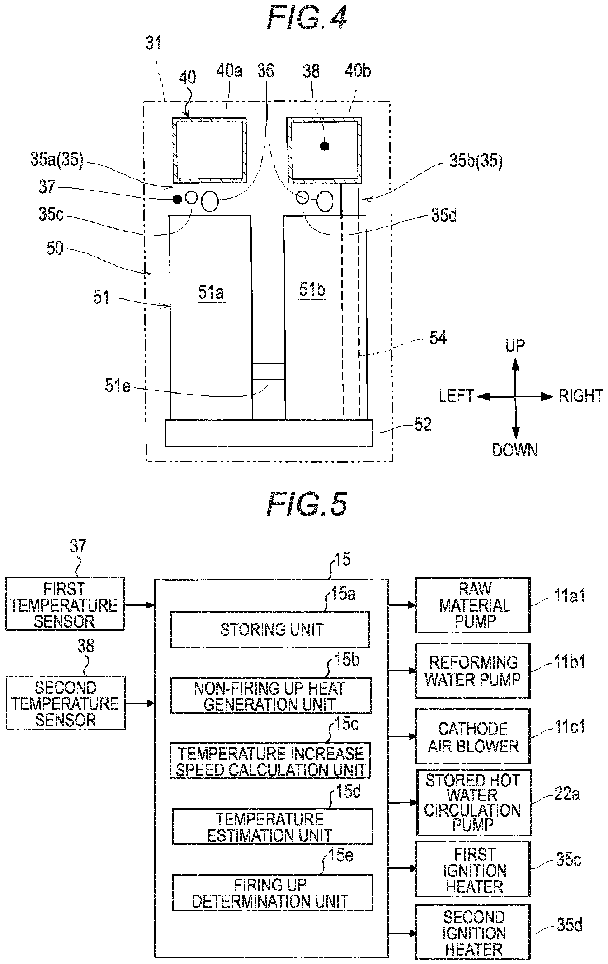

The evaporating unit 32 and the reforming unit 33 described above are formed in a housing 40 as illustrated in Fig. 2. The housing 40 is formed in a planar U-shaped housing by a first rectangular pallalelepiped 40a and a second rectangular pallalelepiped 40b, that are extending along the front-rear direction, and a connecting part 40c that connects rear ends of the rectangular pallalelepiped 40a and the rectangular pallalelepiped 40b. The housing 40 is made of metal. The metal is, for example, alloy steel or carbon steel. The housing 40 is formed in a square section of which the inside is a cavity. The inside of the housing 40 is partitioned into two chambers 41 and 42 by a side wall 40d formed inside of the first rectangular pallalelepiped 40a. The two chambers 41 and 42 are arranged in series in this order and partitioned to allow gas to pass. The evaporating unit 32 is formed in the first chamber 41 and the reforming unit 33 is formed in the second chamber 42. The first rectangular pallalelepiped 40a is arranged above a first stack 51 a (which will be described later). The second rectangular pallalelepiped 40b is arranged above a second stack 51 b (which will be described later) (see Fig. 2 and Fig. 4).

The fuel cell device 34 (50) includes, as illustrated in Fig. 1 and Fig. 3, a fuel cell 51, a manifold 52, and an electrode 53. The fuel cell device 50 includes two electrodes 53 (see Fig. 3). The fuel cell 51 generates the electric power using the reforming gas and the oxidizer gas. The oxidizer gas is, for example, air in the present embodiment. The fuel cell according to the present embodiment is a solid oxide fuel cell and uses zirconium oxide which is a kind of solid oxide as an electrolyte. Hydrogen, carbon monoxide, methane gas, or the like are supplied as fuel to a fuel electrode of the fuel cell 51. An operating temperature is approximately 400°C to 1000°C. The fuel cell 51, as illustrated in Fig. 3, includes two stacks 51 a and 51 b, a supporting member 51 c, a current lead-out member 51 d, and a connecting member 51 e.

The stacks 51 a and 51 b are configured in such a way that a plurality of cells 51a1 and 51b1 formed with a fuel electrode, an air electrode (oxidizer electrode), and an electrolyte interposed between the electrodes are stacked along the front-rear direction. Fuel flow passages 51a2 and 51b2 through which the reforming gas, which is fuel, passes are formed at the fuel electrode sides of the cells 51 a1 and 51 b1. Air flow passages 51 a3 and 51 b3 through which air (cathode gas), which is cathode gas, passes are formed at the air electrode sides of the cells 51a1 and 51b1. The two stacks 51 a and 51 b are arranged in parallel in the front-rear direction as the direction in which the cells 51a1 and 51b1 are stacked.

The supporting members 51c are arranged in the front end and the rear end of the stacks 51 a and 51 b, respectively, and support the stacks 51 a and 51 b, respectively. The supporting members 51c are made of a conductive material to be formed in a planar shape, and are bonded to ends of the stacks 51 a and 51 b by, for example, a conductive adhesive, respectively.

The current lead-out members 51 d lead out electric current generated by the power generation of the cells 51a1 and 51b1. The current lead-out members 51 d are made of a conductive material to be formed in a plate shape extending in the front-rear direction. The current lead-out members 51 d are integrally formed with the supporting members 51 c.

The connecting member 51e is made of a conductive material and connects the current lead-out members 51 d provided in the front ends of the stacks 51 a and 51 b. The stacks 51 a and 51 b are arranged in the same end sides of the stacks 51 a and 51 b in a state where polarities become reverse to each other. With this, the connecting member 51e electrically connects the stacks 51 a and 51 b in series.

The fuel cell 51 is provided on the manifold 52. The reforming gas from the reforming unit 33 is supplied to the manifold 52 through the reforming gas supply pipe 54. The fuel flow passages 51a2 and 51b2 are formed in such a way that lower ends (one ends) of the fuel flow passages are connected to the fuel lead-out port of the manifold 52 and the reforming gas led out from the fuel lead-out port is introduced from the lower ends and led out from the upper ends. On the other hand, the cathode air is introduced from the lower ends of the air flow passages 51a3 and 51 b3 and led out from the upper ends thereof.

In the fuel cell 51, the electric power is generated by the reforming gas supplied to the fuel electrode and the cathode gas supplied to the air electrode. That is, a reaction expressed by the following chemical formula 1 and chemical formula 2 occurs in the fuel electrode and a reaction expressed by the following chemical formula 3 occurs in the air electrode. That is, an oxide ion (O₂⁻) generated in the air electrode is transmitted through the electrolyte and reacts with hydrogen in the fuel electrode and thus, electrical energy is generated. Therefore, the reforming gas and the cathode air that have not been used for the power generation are led out from the fuel flow passages 51a2 and 51b2 and the air flow passages 51a3 and 51b3. The power generated by the fuel cell 51 is output to the inverter device 13 through electrodes 53. The electrodes 53 are connected to the current lead-out members 51 d each of which is provided on the rear end parts of the stacks 51 a and 51 b.

(chemical formula 1) : H₂ + O₂⁻ → H₂O + 2e⁻

(chemical formula 2) : CO + O₂⁻ → CO₂ + 2e⁻

(chemical formula 3) : 1/2O₂ + 2e⁻ → O₂⁻

The combustion unit 35, as illustrated in Fig. 1 and Fig. 4, burns the combustible gas led out from the fuel electrode of the fuel cell 51 using the oxidizer gas and heats the evaporating unit 32 and the reforming unit 33 between the evaporating unit 32, the reforming unit 33, and the fuel cell 51. The combustion unit 35 corresponds to a combustion space in which the combustible gas is burned using the oxidizer gas. The combustible gas is gas which burns, and is reforming gas (anode off gas) led out from the fuel flow passages 51a2 and 51b2 without being used for the power generation. The oxidizer gas is air (cathode air (cathode off gas)) led out from the air flow passages 51a3 and 51b3 without being used for the power generation. In the combustion unit 35, the anode off gas is burned, the combustion gas (flame 36) is generated, and the evaporating unit 32 and the reforming unit 33 are heated by the generated combustion gas.

The combustion unit 35 includes a first combustion unit 35a and a second combustion unit 35b. The first combustion unit 35a, as illustrated in Fig. 4, is arranged between the first rectangular pallalelepiped 40a having the evaporating unit 32 therein and the first stack 51 a. With this, the first combustion unit 35a heats a portion of the reforming unit 33 and the evaporating unit 32. The second combustion unit 35b is arranged between the second rectangular pallalelepiped 40b and the second stack 51 b. With this, the second combustion unit 35b heats a portion of the reforming unit 33. Furthermore, the combustion gas heats the inside of the fuel cell module 30 to the operating temperature. In the combustion unit 35, the anode off gas is burned and combustion exhaust gas is generated. The combustion exhaust gas is exhausted from the fuel cell module 30 through the exhaust pipe 11d.

In the combustion unit 35, as illustrated in Fig. 3 and Fig. 4, a first ignition heater 35c (corresponds to heating device of embodiment disclosed here) and a second ignition heater 35d are provided. The first ignition heater 35c is arranged in the first combustion unit 35a. Specifically, the first ignition heater 35c is arranged between the first stack 51 a and the evaporating unit 32 in the front end part of the first stack 51 a. The second ignition heater 35d is arranged in the second combustion unit 35b. Specifically, the second ignition heater 35d is arranged between the second stack 51 b and the reforming unit 33 in the front end part of the second stack 51 b.

Ignition heaters 35c and 35d include heat generation units 35c1 and 35d1 that generate heat, respectively (see Fig. 1 and Fig. 3). The heat generation units 35c1 and 35d1 are resistors that generate heat by AC current according to instruction from the control device 15. The ignition heaters 35c and 35d heat the combustible gas introduced into the combustion unit 35 by the heat generation units 35c1 and 35d1 to be ignited to thereby fire up the combustion unit 35. Ignition is the phenomena of initiating a combustible target (anode off gas) to be caught on fire. Firing up is when a target (combustion unit 35) is caught up in the flame in a state where the flame is continuous (combustion state).

Furthermore, the fuel cell module 30, as illustrated in Fig. 1 to Fig. 4, further includes a first temperature sensor 37 and a second temperature sensor 38.

The first temperature sensor 37 is arranged in the first combustion unit 35a and detects a temperature of a location at which the first temperature sensor is arranged. Specifically, the first temperature sensor 37 is arranged in a location where the first temperature sensor does not contact the combustion gas (flame 36) and the first ignition heater 35c between the first stack 51 a and the evaporating unit 32 in the first combustion unit 35a. The first temperature sensor 37 is arranged in a location where the temperature of the first temperature is increased when the first ignition heater 35c generates heat. The first temperature sensor 37 transmits the detection result to the control device 15.

The second temperature sensor 38 is arranged in the inside of the reforming unit 33 and detects a temperature of a location at which the second temperature sensor is arranged. Specifically, the second temperature sensor 38 is arranged in the inside of the reforming unit 33 formed in the second rectangular pallalelepiped 40b located above the second stack 51 b (and second combustion unit 35b). The second temperature sensor 38 is arranged to be located above the central portion in the front-rear direction of the second stack 51 b in the inside of the reforming unit 33. The second temperature sensor 38 transmits the detection result to the control device 15.

The control device 15 at least controls the fuel cell 51. The control device 15, as illustrated in Fig. 5, is connected with the respective temperature sensors 37 and 38, the respective pumps 11a1, 11 b1, and 22a, the cathode air blower 11 c1, and the ignition heaters 35c and 35d. The control device 15 includes a storing unit 15a, a non-firing up heat generation unit 15b, a temperature increase speed calculation unit 15c, a temperature estimation unit 15d, and a firing up determination unit 15e.

The storing unit 15a stores data used when executing a control program or the like.

The non-firing up heat generation unit 15b generates heat by the heat generation unit 35c1 without firing up the combustion unit 35 by not allowing combustible gas to be introduced into the combustion unit 35 during the start up operation of the fuel cell system 1. Specifically, the non-firing up heat generation unit 15b turns on the first ignition heater 35c without supplying the reforming gas material from the supply source Gs to the fuel cell module 30, that is, by turning off the raw material pump 11a1.

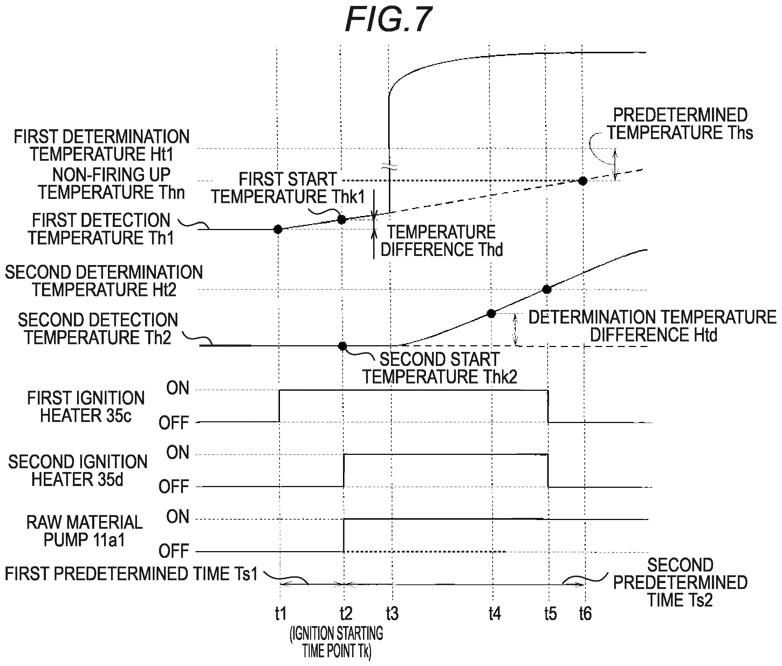

When the heat generation unit 35c1 generates heat by the non-firing up heat generation unit 15b, the temperature increase speed calculation unit 15c calculates a temperature increase speed Vt which is an increase speed of the detection temperature of the first temperature sensor 37 in a case where the first combustion unit 35a is not fired up, on the basis of a detection temperature of the first temperature sensor 37. The temperature increase speed Vt is calculated by dividing a temperature difference Thd (see Fig. 7) between the detection temperature of the first temperature sensor 37 at a time point at which the first ignition heater 35c is turned on by the non-firing up heat generation unit 15b and the detection temperature of the first temperature sensor 37 at a time point after a first predetermined time Ts1 (for example, one minute) has elapsed from that time point by the first predetermined time Ts1 (temperature increase speed Vt = temperature difference Thd / first predetermined time Ts1).

The temperature estimation unit 15d estimates, in a case where ignition of the combustible gas is started by the ignition heaters 35c and 35d during the start up operation of the fuel cell system 1, a non-firing up temperature Thn, which is the detection temperature of the first temperature sensor 37 in a case where the combustion unit 35 is not fired up, at a time point after a second predetermined period of time Ts2 (corresponding to a predetermined time of the embodiment disclosed here) has elapsed from an ignition start time point Tk at which the ignition of the combustible gas is started, on the basis of the temperature increase speed Vt calculated by the temperature increase speed calculation unit 15c. The non-firing up temperature Thn is estimated (calculated) by adding a product of the temperature increase speed Vt calculated by the temperature increase speed calculation unit 15c and a second predetermined time Ts2 to a first start temperature Thk1 (see Fig.7) which is the detection temperature of the first temperature sensor 37 at the ignition start time point Tk (non-firing up temperature Thn = first start temperature Thk1 + (temperature increase speed Vt x second predetermined time Ts2)). A second predetermined time Ts2 is, for example, five minutes.

The firing up determination unit 15e determines, during the start up operation of the fuel cell system 1, whether the combustion unit 35 is fired up or not (which will be described later).

Next, descriptions will be made on an example of basic operations in a case where an electric power transmission is performed by a system power source 16a of the fuel cell system 1 described above. The control device 15 starts the startup operation in a case where a start switch (not illustrated) is depressed or according to an operation plan.

When the start up operation is started, the control device 15 activates the auxiliary machine. Specifically, the control device 15 activates the pumps 11a1 and 11b1 and starts supplying of the reforming raw material and the reforming water to the evaporating unit 32. As described above, the mixed gas is generated in the evaporating unit 32 and the mixed gas is supplied to the reforming unit 33. The reforming gas is generated from the supplied mixed gas in the reforming unit 33 and the reforming gas is supplied to the fuel cell 51. The control device 15 turns the ignition heaters 35c and 35d on and thus, the ignition heaters 35c and 35d are heated. With this, the anode off gas led out from the fuel cell 51 is ignited and the combustion unit 35 is fired up. If an internal temperature (detection temperature of second temperature sensor 38) of the reforming unit 33 becomes greater than or equal to an activation temperature, the startup operation is finished, and the power generation operation is started. In the present embodiment, the activation temperature is, for example, 400°C.

The control device 15 controls the auxiliary device such that the power generated by the fuel cell 51 becomes the power consumption of an external the electric power load 16c during the power generation operation and supplies the reforming raw material and the cathode air (air) to the fuel cell module 30 and the fuel cell 51. In a case where the power consumption of the external electric power load 16c exceeds the power generated by the fuel cell 51, the shortage of the electric power capacity is supplemented by receiving the electric power from the system the power source 16a.

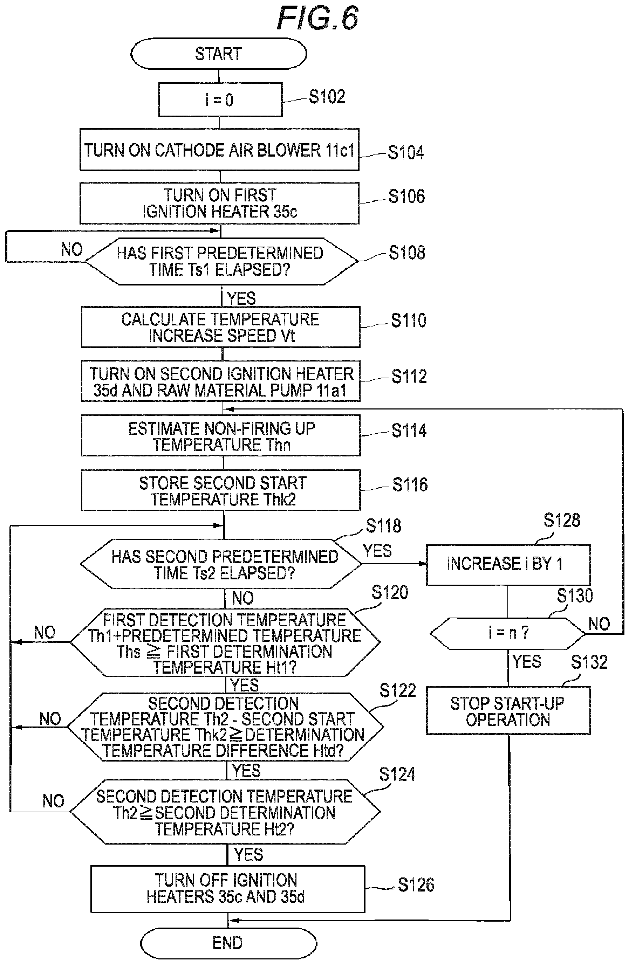

Next, description will be made on a firing up determination control which determines whether the combustion unit 35 is fired up or not, during the start up operation of the fuel cell system 1 described above, in line with a flowchart illustrated in Fig. 6.

In a case where the startup operation is started, the control device 15 sets the counter i to zero, which is an initial value, in Step S102. The counter i is a counter which counts the number of times that the combustion unit 35 is not fired up without igniting the combustible gas even in a case where the ignition heaters 35c and 35d are turned on. The control device 15 turns on a cathode air blower 11c1 in Step S104. With this, supplying of air to the fuel cell 51 is started. The control device 15, in Step S106, turns on the first ignition heater 35c in a state where the reforming raw material is not supplied to the fuel cell 51 (non-firing up heat generation unit 15b).

The control device 15 confirms whether the first predetermined time Ts1 has elapsed or not in Step S108. In a case where the first predetermined time Ts1 has not elapsed, the control device 15 repeatedly executes Step S108. On the other hand, in a case where the first predetermined time Ts1 has elapsed, the control device 15 causes the program to proceed to Step S110.

The control device 15 calculates the temperature increase speed Vt in Step S110 (temperature increase speed calculation unit 15c). The control device 15, in Step S112, turns on the second ignition heater 35d and the raw material pump 11a1 to start supplying of the reforming raw material in a state where the first ignition heater 35c is turned on. With this, ignition of the combustible gas is started. Furthermore, the control device 15 estimates the non-firing up temperature Thn (Step S114; temperature estimation unit 15d) and stores the second start temperature Thk2 (see Fig. 7) which is the detection temperature of the second temperature sensor 38 at the ignition start time point Tk (storing unit 15a; Step S116).

The control device 15 determines whether the combustion unit 35 is fired up within the second predetermined time Ts2 from the ignition start time point Tk or not (firing up determination unit 15e). First, the control device 15, in Step S118, determines whether the second predetermined time Ts2 has elapsed from the ignition start time point Tk or not. In a case where the second predetermined time Ts2 has not elapsed, the control device 15 determines that the result in Step S118 is "NO" and causes the program to proceed to Step S120.

The control device 15 confirms whether the detection temperature of the first temperature sensor 37 (hereinafter, referred to as first detection temperature Th1) is greater than or equal to the first determination temperature Ht1 in Step S120. The first determination temperature Ht1 is a temperature (first determination temperature Ht1 = non-firing up temperature Thn + predetermined temperature Ths) obtained by adding the predetermined temperature Ths to the non-firing up temperature Thn. The predetermined temperature Ths is derived by being measured by experiments or the like such that the first determination temperature Ht1 becomes a temperature (for example, 200°C) sufficiently larger than the non-firing up temperature Thn. In a case where the first combustion unit 35a is not fired up without igniting the combustible gas even when the combustible gas introduced into the first combustion unit 35a from the first stack 51a is heated by the first ignition heater 35c, the first detection temperature Th1 is lower than the first determination temperature Ht1. In this case, the control device 15 determines that the result in Step S120 is "NO", causes the program to return to Step S118, and repeatedly executes Steps S118 and S120 until the second predetermined time Ts2 has elapsed.

On the other hand, in a case where the combustible gas introduced into the first combustion unit 35a from the first stack 51 a is ignited by the first ignition heater 35c and the first combustion unit 35a is fired up, the first detection temperature Th1 increases to be greater than or equal to the first determination temperature Ht1. With this, the control device 15 determines that the first combustion unit 35a is fired up. The control device 15 determines that the result in Step S120 is "YES" and causes the program to proceed to Step S122.

The control device 15, in Step S122, determines whether the detection temperature (hereinafter, referred to as second detection temperature Th2) of the second temperature sensor 38 is increased to be greater than or equal to the determination temperature difference Htd from the ignition start time point Tk or not. Specifically, the control device 15 determines whether the difference between the second detection temperature Th2 at the current time point and the second start temperature Thk2 is greater than or equal to the determination temperature difference Htd or not. The determination temperature difference Htd is derived by being measured by experiments or the like. In a case where the second combustion unit 35b is not fired up without igniting the combustible gas even when the combustible gas introduced into the second combustion unit 35b from the second stack 51 b is heated by the second ignition heater 35d, the reforming unit 33 is not heated and thus, the temperature increased from the ignition start time point Tk of the second detection temperature Th2 is smaller than the determination temperature difference Htd. In this case, the control device 15 determines that the result in Step S122 is "NO", causes the program to return to Step S118, and repeatedly executes Steps S118 to S122 until the second predetermined time Ts2 has elapsed.

On the other hand, in a case where the combustible gas introduced into the second combustion unit 35b from the second stack 51 b is ignited by the second ignition heater 35d and the second combustion unit 35b is fired up, the reforming unit 33 is heated. In a case where the internal temperature of the reforming unit 33 is increased and the temperature increased from the ignition start time point Tk of the second detection temperature Th2 becomes a temperature greater than or equal to the determination temperature difference Htd, the control device 15 determines that the result in Step S122 is "YES" and causes the program to proceed to Step S124.

The control device 15 confirms whether the second detection temperature Th2 is greater than or equal to a second determination temperature Ht2 in Step S124. The second determination temperature Ht2 is higher than the spontaneous firing temperature of the combustible gas and is lower than the activation temperature of the reforming unit 33, and is derived by being measured by experiments, or the like. Even in a case where the second detection temperature Th2 is increased to be greater than or equal to the determination temperature difference Htd from the ignition start time point Tk, for example, when the second combustion unit 35b is partially fired up, the second detection temperature Th2 may be lower than the second determination temperature Ht2. In this case, the control device 15 determines that the result in Step S124 is "NO", causes the program to return to Step S118, and repeatedly executes Steps S118 to S124 until the second predetermined time Ts2 has elapsed.

On the other hand, for example, in a case where the second combustion unit 35b is fired up in its entirety, the second detection temperature Th2 becomes greater than or equal to the second determination temperature Ht2. With this, the control device 15 determines that the second combustion unit 35b is fired up. The control device 15 determines that the result in Step S124 is "YES". Since the first combustion unit 35a and the second combustion unit 35b are fired up, in Step S126, the control device 15 turns on the ignition heaters 35c and 35d and continues the startup operation.

In a case where any of the first combustion unit 35a and the second combustion unit 35b is not fired up and the second predetermined time Ts2 has elapsed, the control device 15 determines that the result in Step S118 is "YES" and causes the program to proceed to Step S128. The control device 15 increases the counter i by 1 in Step S128 and determines whether the counter i has reached the predetermined number of times n or not in Step S130. The predetermined number of times n is, for example, 3. In a case where the counter i does not reach the predetermined number of times n, the control device 15 determines that the result in Step S130 is "NO", causes the program to return to S114, and continues ignition of the combustible gas.

On the other hand, in a case where abnormality occurs in the fuel cell system 1, the combustion unit 35 is not fired up, and the counter i has reached the predetermined number of times n, the control device 15 determines that the result in Step S130 is "YES". The abnormality in the fuel cell system 1 is, for example, failure of the ignition heaters 35c and 35d. The control device 15 stops the startup operation in Step S132.

Next, description will be made on a case where the fuel cell system 1 operates in line with the flowchart described above and the combustion unit 35 is fired up using a time chart illustrated in Fig. 7.

When the startup operation of the fuel cell system 1 is started and the first ignition heater 35c is turned on (time t1; Step S106), the first detection temperature Th1 is increased due to generation of heat by the first ignition heater 35c. When the first predetermined time Ts1 has elapsed (time t2; Step S108), the temperature increase speed Vt is calculated on the basis of the temperature difference Thd at that time point (Step S110). In this case, the control device 15 turns on the second ignition heater 35d and the raw material pump 11a1, starts ignition of the combustible gas by leading out the combustible gas into the combustion unit 35 (time t2 (ignition start time point Tk); Step S112), estimates the non-firing up temperature Thn from the first start temperature Thk1 and the temperature increase speed Vt (Step S114), and stores the second start temperature Thk2 (Step S116).

When the combustion unit 35 is not fired up after ignition of the combustible gas is started, the first detection temperature Th1 is increased while maintaining the temperature increase speed Vt, and the second detection temperature Th2 maintains the second start temperature Thk2 (time t2 and time t3).

When the combustion unit 35 is fired up (time t3), the first temperature sensor 37 is arranged in the first combustion unit 35a and accordingly, located relatively near a flame 36 and thus, the first detection temperature Th1 is abruptly increased and becomes higher than the first determination temperature Ht1 (= non-firing up temperature Thn + predetermined temperature Ths). In this case, although the second combustion unit 35b is heating the reforming unit 33, the second temperature sensor 38 is arranged in the inside of the reforming unit 33 and thus, the second detection temperature Th2 is gradually increased. The second combustion unit 35b heats the reforming unit 33 and thus, a temperature difference between the second detection temperature Th2 and the second start temperature Thk2 becomes greater than or equal to the determination temperature difference Htd (time t4), and the second detection temperature Th2 becomes greater than or equal to the second determination temperature Ht2 (time t5). In this case, since the control device 15 determines, before the time point (time t6) after the second predetermined time Ts2 has elapsed from the ignition start time point Tk, that the combustion unit 35 is fired up (Steps S118 to S126), the ignition heaters 35c and 35d are turned off (time t5; Step S128).

On the other hand, in a case where the combustion unit 35 is not fired up even when ignition of the combustible gas is started, the first detection temperature Th1 is increased while maintaining the temperature increase speed Vt (after time t2 (time after time t3 is represented by dotted line)). On the other hand, the second detection temperature Th2 maintains the second start temperature Thk2 (after time t2 (time after time t3 is represented by dotted line)).

According to the first embodiment disclosed here, the fuel cell system 1 includes the fuel cell 51 that generates the electric power using reforming gas and oxidizer gas, the evaporating unit 32 that generates water vapor from reforming water, the reforming unit 33 that generates reforming gas from a reforming raw material supplied from a supply source Gs and the water vapor supplied from the evaporating unit 32 and supplies the reforming gas to the fuel cell 51, the combustion unit 35 that burns combustible gas led out from a combustion electrode of the fuel cell 51 using the oxidizer gas and heats the evaporating unit 32 and the reforming unit 33 between the evaporating unit 32, the reforming unit 33, and the fuel cell 51, the first ignition heater 35c that includes a heat generation unit 35c1 to generate heat, heats the combustible gas, which is introduced into the combustion unit 35, by the heat generation unit 35c1 to be ignited, and fires up the combustion unit 35, the first temperature sensor 37 that is arranged in the combustion unit 35 and detects a temperature of a location where the first temperature sensor is arranged, the second temperature sensor 38 that is arranged in the inside of at least one of the evaporating unit and the reforming unit 33 and detects a temperature of a location where the second temperature sensor is arranged, and the control device 15 that controls at least the fuel cell 51. The control device 15 includes the non-firing up heat generation unit 15b which generates heat by the heat generation unit 35c1 without firing up the combustion unit 35 by not allowing the combustible gas to be introduced into the combustion unit 35 during start up operation of the fuel cell system 1, the temperature increase speed calculation unit 15c that, when the heat generation unit 35c1 generates heat due to the non-firing up heat generation unit 15b, calculates a temperature increase speed Vt which is an increase speed of the first detection temperature Th1 in a case where the combustion unit 35 is not fired up on the basis of the detection temperature (first detection temperature Th1) of the first temperature sensor 37, a temperature estimation unit 15d that estimates, in a case where the ignition of the combustible gas is started by the first ignition heater 35c during the start up operation of the fuel cell system 1, a non-firing up temperature Thn, which is the first detection temperature Th1 in a case where the combustion unit 35 is not fired up at a time point after a second predetermined time Ts2 has elapsed from an ignition start time Tk point at which ignition of the combustible gas is started, on the basis of the temperature increase speed Vt calculated by the temperature increase speed calculation unit 15c, and the firing up determination unit 15e which determines, during the start up operation of the fuel cell system 1, whether the combustion unit 35 is fired up or not. In a case where the first detection temperature Th1 becomes greater than or equal to a first determination temperature Ht1 obtained by adding a predetermined temperature Ths to the non-firing up temperature Thn estimated by the temperature estimation unit 15d, the detection temperature of the second temperature sensor 38 (second detection temperature Th2) is increased to be greater than or equal to the determination temperature difference Htd, and becomes greater than or equal to a second determination temperature Ht2, within a second predetermined period of time Ts2 from the ignition start time point Tk, the firing up determination unit 15e determines that the combustion unit 35 is fired up.

Accordingly, the first temperature sensor 37 is arranged in the combustion unit 35 and the second temperature sensor 38 is arranged in the inside of the reforming unit 33 which is heated by the combustion unit 35, and each of the temperature sensors 37 and 38 detects a temperature of a location where each temperature sensor is arranged. The firing up determination unit 15e determines whether the combustion unit 35 is fired up or not, on the basis of the detection temperatures of the first temperature sensor 37 and the second temperature sensor 38 that are arranged at different portions during the startup operation of the fuel cell system 1. It is possible to reliably determine that the combustion unit 35 is fired up.

When ignition of the combustible gas is performed by the first ignition heater 35c during the startup operation of the fuel cell system 1, in a case where the combustion unit 35 is not fired up at the time point after the second predetermined time Ts2 has elapsed from the ignition start time point Tk, the temperature estimation unit 15d estimates the non-firing up temperature Thn. The firing up determination unit 15e determines whether the combustion unit 35 is fired up or not, from the detection temperature of the first temperature sensor 37 on the basis of the first determination temperature Ht1 obtained by adding the predetermined temperature Ths to the non-firing up temperature Thn derived by the temperature estimation unit 15d. The firing up determination unit 15e distinguishes a temperature increase of the combustion unit 35 in a case where the combustion unit 35 is not fired up and another temperature increase of the combustion unit 35 in a case where the combustion unit 35 is fired up and determines whether the combustion unit 35 is fired up or not.

The firing up determination unit 15e determines, from the detection temperature (second detection temperature Th2) of the second temperature sensor 38 arranged in the inside of the reforming unit 33 heated by the combustion unit 35, whether the combustion unit 35 is fired up or not. The evaporating unit 32 and the reforming unit 33 are heated by the combustion unit 35 and thus, in a case where the combustion unit 35 is fired up, the internal temperature of the evaporating unit 32 and the reforming unit 33 are increased. For example, after the second predetermined time Ts2 has elapsed from the ignition start time point Tk, in a case where the increased temperature of the second detection temperature Th2 is relatively small or in a case where the second detection temperature Th2 is lower than the second determination temperature Ht2, the firing up determination unit 15e is able to determine that the combustion unit 35 is not fired up. The firing up determination unit 15e determines, from the first detection temperature Th1 and the second detection temperature Th2, whether the combustion unit 35 is fired up or not and thus, is able to reliably determine firing up of the combustion unit 35.

The control device 15, in the firing up determination control, uses the detection temperature of the second temperature sensor 38 arranged in the inside of the reforming unit 33 in order to determine whether the second combustion unit 35b is fired up or not. In a case where, when the second combustion unit 35b is not partially fired up, for example, the second detection temperature Th2 becomes lower than the second determination temperature Ht2. In this case, the control device 15 may determine that the second combustion unit 35b is not fired up. The control device 15 may determine, using a single temperature sensor, that the combustion unit 35 is not fired up for a case where the second combustion unit 35b is not partially fired up. In other words, the control device 15 may determine whether the second combustion unit 35b is fired up in its entirety using a single temperature sensor. The second temperature sensor 38 is a sensor for detecting the activation temperature of the reforming unit 33 in the first place. That is, the control device 15 uses the detection temperature of the second temperature sensor 38 in the firing up determination control. Thus, it is possible to decrease the number of temperature sensors for performing the firing up determination control, and thus, the firing up determination control may be performed at a low cost.

The evaporating unit 32 and the reforming unit 33 are arranged above the fuel cell 51, the fuel cell 51 is formed in such a way that the two stacks 51 a and 51 b in which the cells 51a1 and 51b1 respectively provided with fuel electrodes are stacked are arranged in parallel to be electrically connected with each other, the first temperature sensor 37 is arranged in the combustion unit 35 (first combustion unit 35a) located above the first stack 51a of one of the two stacks 51 a and 51 b, and the second temperature sensor 38 is arranged in the inside of the reforming unit 33 arranged above the second stack 51 b of the other of the two stacks 51 a and 51 b.

Accordingly, even in a case where the fuel cell 51 is formed by the two stacks 51 a and 51 b, as described in the first embodiment disclosed here, the first temperature sensor 37 is arranged in the first combustion unit 35a which is located above the first stack 51 a and the second temperature sensor 38 is arranged in the inside of the reforming unit 33 which is located above the second stack 51 b. The firing up determination unit 15e determines whether the combustion unit 35 is fired up or not, on the basis of the increased temperature of the combustion unit 35 located above each of the two stacks 51 a and 51 b. Even in a case where the fuel cell 51 is formed by the two stacks 51 a and 51 b, the firing up determination unit 15e may reliably determine the firing up of the combustion unit 35.

### (Second Embodiment)

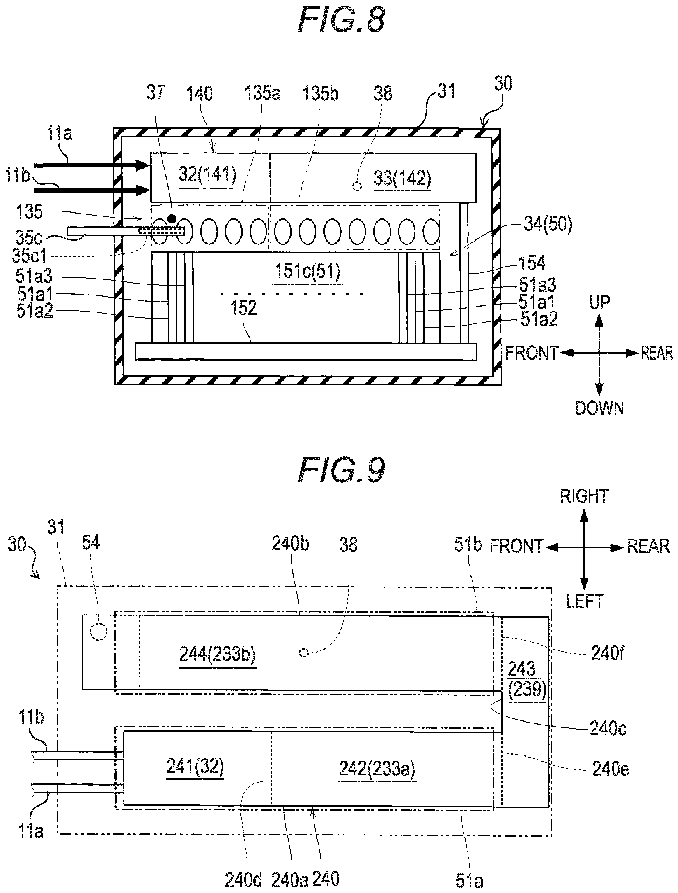

Next, description will be made mainly on portions of a second embodiment of the fuel cell system 1 disclosed here different from those of the first embodiment. In the first embodiment described above, although the fuel cell 51 is configured by the two stacks 51 a and 51 b, the fuel cell 51 is configured by a single stack 151c in the second embodiment as illustrated in Fig. 8. The stack 151c has the same configuration as that of each of the stacks 51 a and 51 b in the first embodiment described above. In the second embodiment, a housing 140 is provided instead of the housing 40 in the first embodiment described above. The housing 140 is formed by a rectangular pallalelepiped extending in the front-rear direction and located above the stack 151c. The inside of the housing 140 is formed in a square section of which the inside is a cavity. The inside of the housing 140 is partitioned into two chambers to allow gas to pass, and the evaporating unit 32 is arranged in the first chamber 141 located at the front side of the housing and the reforming unit 33 is arranged in the second chamber 142 located at the rear side thereof. The reforming gas supply pipe 154 connects the reforming unit 33 and the manifold 152 in the rear thereof.

In a combustion unit 135 in the second embodiment disclosed here, the first combustion unit 135a is formed between a stack 151c and the evaporating unit 32 and heats only the evaporating unit 32 in the combustion unit 135. In the second embodiment disclosed here, the second combustion unit 135b is formed between the stack 151c and the reforming unit 33 and heats only the reforming unit 33. The fuel cell system 1 includes only a first ignition heater 35c. The first ignition heater 35c is arranged in the first combustion unit 135a. The first temperature sensor 37 is arranged in the first combustion unit 135a. The second temperature sensor 38 is arranged above the central portion in the front-rear direction of the second combustion unit 135b in the inside of the reforming unit 33.

In the fuel cell system 1 configured as described above, in a case where ignition of the combustible gas is started and, for example, the first combustion unit 35a is fired up, but the second combustion unit 135b is not fired up, the first detection temperature Th1 is greater than or equal to the first determination temperature, but the second detection temperature Th2 is lower than, for example, the second determination temperature Ht2. With this, the control device 15 may determine that the combustion unit 135 is not fired up (Step S124). In a case where the combustion unit 135 is partially fired up, the control device 15 may determine that the combustion unit 135 is not fired up. Therefore, the control device 15 may reliably determine that the combustion unit 135 is fired up in its entirety.

According to the second embodiment disclosed here, the first combustion unit 135a and the second combustion unit 135b are formed above the stack 151c. The evaporating unit 32 and the reforming unit 33 are arranged above the fuel cell 51, the combustion unit 135 includes the first combustion unit 135a which heats the evaporating unit 32 and the second combustion unit 135b which heats the reforming unit 33, the first temperature sensor 37 is arranged in the first combustion unit 135a, and the second temperature sensor 38 is arranged in the inside of the reforming unit 33 which is heated by the second combustion unit 135b.

Accordingly, the firing up determination unit 15e determines whether the combustion unit 135 is fired up or not, on the basis of an increase temperature of each of the first combustion unit 135a and the second combustion unit 135b located at different portions in the combustion unit 135. In a case where the combustion unit 135 is partially fired up, the control device 15 may determine that the combustion unit 135 is not fired up in its entirety. The firing up determination unit 15e may more reliably determine firing up of the combustion unit 135.

### (Third Embodiment)

Next, description will be made mainly on portions of a third embodiment of the fuel cell system 1 disclosed here different from those of the first embodiment. Although the fuel cell module 30 includes a single reforming unit 33 in the embodiment described above, the fuel cell module 30 includes two reforming units 233a and 233b in the third embodiment as illustrated in Fig. 9. Furthermore, the fuel cell module 30 further includes a desulfurizing unit 239 in the third embodiment.

In the third embodiment disclosed here, the fuel cell module 30 includes a housing 240 instead of the housing 40 of the first embodiment. Although the housing 240 is formed in a planar U-shape similar to the housing 40 of the first embodiment, the housing 240 is different from the housing 40 of the first embodiment in that a connection part 240c is formed to be located in the rear of the fuel cell 51 in a plan view. The inside of the housing 240 is partitioned into four chambers 241, 242, 243, and 244 by three side walls 240d, 240e, and 240f. Four chambers 241, 242, 243, and 244 are serially arranged in this order and partitioned to allow gas to pass. The evaporating unit 32 is formed in the first chamber 241, the first reforming unit 233a is formed in the second chamber 242, the desulfurizing unit 239 is formed in the third chamber, and the second reforming unit 233b is formed in the fourth chamber. The first chamber 241 and the second chamber 242 are arranged above the first stack 51 a. The third chamber 243 is located at the rear of the fuel cell 51 in a plan view. The fourth chamber 244 is arranged above the second stack 51 b.

The reforming raw material supplied from the reforming raw material supply pipe 11 a to the fuel cell module 30 passes through the evaporating unit 32, the first reforming unit 233a, the desulfurizing unit 239, and the second reforming unit 233b in this order to be supplied to the fuel cell 51. An odorant is added to the reforming raw material in order to make it easy to detect the leakage of the reforming raw material by smell. The odorant is an organic sulfur compound and is, for example, tertiary butyl mercaptan or methyl mercaptan.

The first reforming unit 233a generates hydrogen from the reforming raw material and water vapor (reforming water vapor). Specifically, the first reforming unit 233a supplies heat required for a reforming reaction of the water vapor heated by the combustion gas so as to generates hydrogen from the mixed gas (reforming raw material and reforming water vapor) supplied from the evaporating unit 32 and lead out the hydrogen. The first reforming unit 233a is filled with the catalyst (for example, Ru or Ni based catalyst) and mixed gas is reacted by the catalyst to be reformed and hydrogen gas and carbon monoxide gas are generated (so-called water vapor reforming reaction). At the same time, a so-called carbon monoxide shift reaction, in which the carbon monoxide gas and the water vapor that are generated by water vapor reforming reaction, are reacted with each other and are respectively converted into hydrogen and carbon dioxide gas, occurs.

An internal temperature of the first reforming unit 233a is preferably, for example, 100°C to 300°C. Since a reforming reaction rate of a reforming catalyst becomes higher and thus an amount of hydrogen to be generated becomes larger as a temperature increases, the internal temperature of the first reforming unit 233a is set so as to cause the reaction to be performed at a predetermined reforming reaction rate. The predetermined reforming reaction rate is preferably set to a value corresponding to an amount of hydrogen required for the desulfurizing unit 239.

The desulfurizing unit 239 removes the odorant (sulfur compound) of the reforming raw material and supplies the reforming raw material to the second reforming unit 233b. A hydro desulfurizing agent and a super high-order desulfurizing agent as the desulfurization catalyst are accommodated in the desulfurizing unit 239. In the hydro desulfurizing agent, the sulfur compound and hydrogen from the first reforming unit 233a are reacted and hydrogen sulfide is generated. For example, the hydro desulfurizing agent is a combination of a nickel-molybdenum-based hydro desulfurizing agent, a cobalt-molybdenum-based hydro desulfurizing agent, zinc oxide, or the like. As the super high-order desulfurizing agent, for example, a copper-zinc-based desulfurizing agent, a copper-zinc-nickel-based desulfurizing agent or the like may be used. The super high-order desulfurizing agent takes in the hydrogen sulfide converted from the sulfur compound by the hydro desulfurizing agent and removes the hydrogen sulfide. The super high-order desulfurizing agent described above exhibits an excellent desulfurizing effect under a high temperature of 200°C to 300°C (for example, 250°C to 300°C). The desulfurizing unit 239 is placed in a site of which the inside is in a high temperature state having a temperature of 200°C to 300°C (for example, 250°C to 300°C).

At least hydrogen which is contained in gas led out from the first reforming unit 233a and the reforming raw material which is unreformed and contained in gas led out from the first reforming unit 233a are supplied to the desulfurizing unit 239. As a result, in the desulfurizing unit 239, the sulfur compound of the reforming raw material is reacted with hydrogen and hydrogen sulfide is generated, and the hydrogen sulfide is removed by the super high-order desulfurizing agent.

The second reforming unit 233b generates the reforming gas from water vapor (reforming water vapor) and the reforming raw material supplied by passing through the desulfurizing unit 239, similar to the reforming unit 33 of respective embodiments described above. An internal temperature of the second reforming unit 233b is preferably, for example, 300°C to 600°C.

In the third embodiment disclosed here, the first temperature sensor 37 is arranged in the first combustion unit 35a, similar to the first embodiment described above. The second temperature sensor 38 is arranged in the inside of the second reforming unit 233b.

In the embodiments described above, although an example of the fuel cell system 1 is illustrated, the embodiment disclosed here is not limited thereto, and may adopt other configuration. For example, in the first embodiment described above, although the second temperature sensor 38 is arranged in the inside of the reforming unit 33 located above the second stack 51 b, the second temperature sensor 38 may be arranged in the inside of the evaporating unit 32 or the reforming unit 33 located above the first stack 51a, instead of the reforming unit 33 located above the second stack 51b. In this case, the first temperature sensor 37 is arranged in the combustion unit 35 (second combustion unit 35b) located above the second stack 51b of the two stacks 51 a and 51b and the second temperature sensor 38 is arranged in the inside of the evaporating unit 32 or the reforming unit 33 located above the first stack 51 a of the two stacks 51 a and 51 b. That is, the first temperature sensor 37 is arranged in the combustion unit 35 located above one of the two stacks 51 a and 51 b and the second temperature sensor 38 is arranged in the evaporating unit 32 and the reforming unit 33 of the other of the two stacks 51 a and 51 b.

In the second embodiment described above, although the first temperature sensor 37 is arranged in the first combustion unit 35a and the second temperature sensor 38 is arranged in the inside of the reforming unit 33, the first temperature sensor 37 may be arranged in the second combustion unit 35b and the second temperature sensor 38 may be arranged in the inside of the evaporating unit 32 instead of such an arrangement. As such, the first temperature sensor 37 may be arranged in one of the first combustion unit 35a and the second combustion unit 35b and the second temperature sensor 38 may be arranged in the inside of one of the evaporating unit 32 and the reforming unit 33 heated by the other of the first combustion unit 35a and the second combustion unit 35b.

In the third embodiment described above, although the second temperature sensor 38 is arranged in the inside of the second reforming unit 233b, the second temperature sensor 38 may be arranged in the inside of the evaporating unit 32 or the first reforming unit 233a, instead of the second reforming unit 233b. In this case, the first temperature sensor 37 may be arranged in the second combustion unit 35b.

In the respective embodiments described above, the fuel cell module 30 may include a plurality of first temperature sensors 37 and a plurality of second temperature sensors 38, the first temperature sensors 37 may be arranged in the combustion units 35a and 35b, and the second temperature sensors 38 may be arranged in the inside of the evaporating unit 32 and the reforming unit 33. That is, the second temperature sensor 38 is arranged in the inside of at least one of the evaporating unit 32 and the reforming unit 33.

In the firing up determination control (see Fig. 6) of each embodiment described above, although the reforming water is not supplied to the evaporating unit 32, the reforming water may be supplied to the evaporating unit 32 in the firing up determination control instead. For example, in the flowchart illustrated in Fig. 6, in the time point of any of Steps S102 to S116, the reforming water is supplied to the evaporating unit 32. With this, it is possible to restrain the occurrence of caulking inside of the reforming unit 33.

In each embodiment described above, although the control device 15 determines, by the firing up determination control, whether the combustion unit 35 is fired up or not, the control device 15 may perform a blow-off determination control which determines whether the combustion unit 35 is blown off or not. Blowing off of the combustion unit 35 is when a combustion state of the combustion unit 35 is ended. Specifically, in a case where the first detection temperature Th1 and the second detection temperature Th2 continue to be less than or equal to a third determination temperature for a third predetermined time during the startup operation and the power generation operation of the fuel cell system 1, the blow-off determination control determines that the combustion unit 35 is blown off. The third predetermined time is, for example, one minute. The third determination temperature is, for example, 50°C.

Accordingly, even in a case where the fuel cell 51 is formed by two stacks 51a and 51 b, it is possible to detect that the combustion unit 35 located above each of the stacks 51 a and 51 b is blown off. Further, regarding the combustion unit 35 which heats the evaporating unit 32 or the reforming unit 33 in which the second temperature sensor 38 is arranged, in a case where the combustion unit 35 is partially blown off, the detection temperature (second detection temperature Th2) of the second temperature sensor 38 is decreased. In a case where the second detection temperature Th2 continues to be less than or equal to the third determination temperature for the third predetermined time, it is determined that the combustion unit 35 is blown off. Even in a case where the combustion unit 35 is partially blown off, the control device 15 is able to detect that the combustion unit 35 is blown off. Therefore, the control device 15 is able to detect blowing off of the combustion unit 35 without arranging a plurality of temperature sensors in the combustion unit 35.

Furthermore, the shape of respective housing units 40, 140, and 240, the positional relationship between respective housing units 40, 140, and 240 and the fuel cell 51 (stacks 51a, 51 b, and 151 c), the arrangement positions of the evaporating unit 32 and the reforming unit 33, the arrangement position of the ignition heaters 35c and 35d, and the arrangement position or number of respective temperature sensors 37 and 38 may be changed in a range without departing from a gist of the embodiment disclosed here.

## Claims

1. A fuel cell system (1) comprising:
a fuel cell (51) that is configured to generate electric power using reforming gas and oxidizer gas;
an evaporating unit (32) that is configured to generate water vapor from reforming water;
a reforming unit (33) that is configured to generate the reforming gas from a reforming raw material supplied from a supply source (GS) and the water vapor supplied from the evaporating unit (32) and supply the reforming gas to the fuel cell (51);
a combustion unit (35) that is configured to burn combustible gas led out from a combustion electrode of the fuel cell (51) using the oxidizer gas and heat the evaporating unit (32) and the reforming unit (33) between the evaporating unit (32), the reforming unit (33), and the fuel cell (51);
a heating device (35c, 35d) that includes a heat generation unit (35c1, 35d1) to generate heat and is configured to ignite the combustible gas, which is introduced into the combustion unit (35), by heating the combustible gas using the heat generation unit (35c1, 35d1), to thereby fire up the combustion unit (35);
a first temperature sensor (37) that is arranged in the combustion unit (35) and is configured to detect a temperature of a location where the first temperature sensor (37) is arranged and the temperature is increased when the heating device (35c, 35d) generates heat by the heat generation unit (35c1, 35d1);
a second temperature sensor (38) that is arranged in the inside of at least one of the evaporating unit (32) and the reforming unit (33) and is configured to detect a temperature of a location where the second temperature sensor (38) is arranged; and
a control device (15) that and is configured to control at least the fuel cell (51),
wherein the control device (15) includes:
a non-firing up heat generation unit (15b) which is configured to turn on the heating device (35c, 35d) to generate heat by the heat generation unit (35c1, 35d1) without firing up the combustion unit (35) by not allowing the combustible gas to be introduced into the combustion unit (35) during a start up operation of the fuel cell system (1),
a temperature increase speed calculation unit (15c) that is configured to calculate, when the heat generation unit (35c1, 35d1) generates heat after the heating device (35c, 35d) has been turned on by the non-firing up heat generation unit (15b), a temperature increase speed (Vt) which is an increase speed of a detection temperature (Th1) of the first temperature sensor (37) in a case where the combustion unit (35) is not fired up on the basis of the detection temperature (Th1) of the first temperature sensor (37),
a temperature estimation unit (15d) that is configured to estimate, in a case where ignition of the combustible gas is started by the heating device (35c, 35d) during the start up operation of the fuel cell system (1), a non-firing up temperature (Thk1), which is the detection temperature (Th1) of the first temperature sensor (37) in a case where the combustion unit (35) is not fired up, at a time point after a predetermined period of time (Ts1) has elapsed from an ignition start time point (Tk) at which the ignition of the combustible gas is started, on the basis of the temperature increase speed (Vt) calculated by the temperature increase speed calculation unit (15c), and
a firing up determination unit (15e) which is configured to determine, during the start up operation of the fuel cell system (1), whether the combustion unit (35) is fired up or not, and
wherein the firing up determination unit (15e) is configured to determine that the combustion unit (35) is fired up in a case where the detection temperature (Th1) of the first temperature sensor (37) becomes a temperature greater than or equal to a first determination temperature (Ht1) obtained by adding a predetermined temperature (Ths) to the non-firing up temperature (Thk1) estimated by the temperature estimation unit (15d), and a detection temperature (Th2) of the second temperature sensor (38) is increased by a predetermined determination temperature difference (Htd) or more and becomes a temperature greater than or equal to a predetermined second determination temperature (Ht2), within a predetermined period of time (Ts2) from the ignition start time point (Tk).

2. The fuel cell system (1) according to claim 1,
wherein the second determination temperature (Ht2) is a temperature which is higher than a spontaneous firing temperature of the combustible gas and lower than an activation temperature of the reforming unit (33).

3. The fuel cell system (1) according to claim 1 or 2,
wherein the evaporating unit (32) and the reforming unit (33) are arranged above the fuel cell (51),
the combustion unit (35) includes a first combustion unit (35a) which is configured to heat the evaporating unit (32) and a second combustion unit (35b) which is configured to heat the reforming unit (33),
the first temperature sensor (37) is arranged in one of the first combustion unit (35a) and the second combustion unit (35b), and
the second temperature sensor (38) is arranged in the inside of one of the evaporating unit (32) and the reforming unit (33) that is heated by the other of the first combustion unit (35a) and the second combustion unit (35b).

4. The fuel cell system (1) according to claim 1 or 2,
wherein the evaporating unit (32) and the reforming unit (33) are arranged above the fuel cell (51),
the fuel cell (51) is formed in such a way that two stacks (51a, 51b) in which cells (51a1, 51b1) having the fuel electrode are stacked are arranged in parallel to be electrically connected to each other,
the first temperature sensor (37) is arranged in the combustion unit (35) located above one of the two stacks (51a, 51b), and
the second temperature sensor (38) is arranged in the inside of one of the evaporating unit (32) and the reforming unit (33) that is arranged above the other of the two stacks (51a, 51b).

## Patentansprüche

1. Brennstoffzellensystem (1) mit:
einer Brennstoffzelle (51), die so gestaltet ist, dass sie unter Verwendung von Reformiergas und Oxidationsmittelgas elektrischen Strom erzeugt;
einer Verdampfungseinheit (32), die so gestaltet ist, dass sie aus Reformierwasser Wasserdampf erzeugt;
einer Reformiereinheit (33), die so gestaltet ist, dass sie aus einem Reformierausgangsmaterial, das aus einer Versorgungsquelle (GS) zugeführt wird, und dem Wasserdampf, der aus der Verdampfungseinheit (32) zugeführt wird, das Reformiergas erzeugt und das Reformiergas der Brennstoffzelle (51) zuführt;
einer Verbrennungseinheit (35), die so gestaltet ist, dass sie unter Verwendung des Oxidationsmittelgases brennbares Gas verbrennt, das aus einer Verbrennungselektrode der Brennstoffzelle (51) herausgeführt wird, und die zwischen der Verdampfungseinheit (32), der Reformiereinheit (33) und der Brennstoffzelle (51) die Verdampfungseinheit (32) und die Reformiereinheit (33) erhitzt;
einer Heizvorrichtung (35c, 35d), die eine Wärmeerzeugungseinheit (35c1, 35d1) aufweist, um Wärme zu erzeugen, und die so gestaltet ist, dass sie das brennbare Gas, das in die Verbrennungseinheit (35) eingeleitet wird, zündet, indem sie das brennbare Gas unter Verwendung der Wärmeerzeugungseinheit (35c1, 35d1) erhitzt, um dadurch die Verbrennungseinheit (35) anzuheizen;
einem ersten Temperatursensor (37), der in der Verbrennungseinheit (35) angeordnet ist, und der so gestaltet ist, dass er eine Temperatur einer Stelle erfasst, an der der Temperatursensor (37) angeordnet ist und sich die Temperatur erhöht, wenn die Heizvorrichtung (35c, 35d) durch die Wärmeerzeugungseinheit (35c1, 35d1) Wärme erzeugt;
einem zweiten Temperatursensor (38), der im Inneren von zumindest einer der Verdampfungseinheit (32) und der Reformiereinheit (33) angeordnet ist und der so gestaltet ist, dass er eine Temperatur einer Stelle erfasst, an der der zweite Temperatursensor (38) angeordnet ist; und
einer Steuerungsvorrichtung (15), die so gestaltet ist, dass sie zumindest die Brennstoffzelle (51) steuert,
wobei die Steuerungsvorrichtung (15) Folgendes aufweist:
eine Nicht-Anheiz-Wärmeerzeugungseinheit (15b), die so gestaltet ist, dass sie die Heizvorrichtung (35c, 35d) einschaltet, um durch die Wärmeerzeugungseinheit (35c1, 35d1) Wärme zu erzeugen, ohne die Verbrennungseinheit (35) anzuheizen, indem sie nicht zulässt, dass das brennbare Gas während eines Hochfahrvorgangs des Brennstoffzellensystems (1) in die Verbrennungseinheit (35) eingeleitet wird,
eine Temperaturerhöhungsgeschwindigkeit-Berechnungseinheit (15c), die so gestaltet ist, dass sie, wenn die Wärmeerzeugungseinheit (35c1, 35d1) Wärme erzeugt, nachdem die Heizvorrichtung (35c, 35d) durch die Nicht-Anheiz-Wärmeerzeugungseinheit (15b) eingeschaltet worden ist, auf der Grundlage einer Erfassungstemperatur (Th1) des ersten Temperatursensors (37) eine Temperaturerhöhungsgeschwindigkeit (Vt) erfasst, die eine Erhöhungsgeschwindigkeit einer Erfassungstemperatur (Th1) des ersten Temperatursensors (37) in einem Fall ist, in dem die Verbrennungseinheit (35) nicht angeheizt ist,
eine Temperatur-Schätzeinheit (15d), die so gestaltet ist, dass sie in einem Fall, in dem während des Hochfahrvorgangs des Brennstoffzellensystems (1) durch die Heizvorrichtung (35c, 35d) eine Zündung des brennbaren Gases gestartet wird, auf der Grundlage der durch die Temperaturerhöhungsgeschwindigkeit-Berechnungseinheit (15c) berechneten Temperaturerhöhungsgeschwindigkeit (Vt) zu einem Zeitpunkt, nachdem von einem Zündstartzeitpunkt (Tk) an, bei dem die Zündung des brennbaren Gases gestartet wird, eine vorbestimmte Zeitdauer (Ts1) verstrichen ist, eine Nicht-Anheiz-Temperatur (Thk1) schätzt, die die Erfassungstemperatur (Th1) des ersten Temperatursensors (37) in einem Fall ist, in dem die Verbrennungseinheit (35) nicht angeheizt ist, und
eine Anheiz-Ermittlungseinheit (15e), die so gestaltet ist, dass sie während des Hochfahrvorgangs des Brennstoffzellensystems (1) ermittelt, ob die Verbrennungseinheit (35) angeheizt ist oder nicht, und
wobei die Anheiz-Ermittlungseinheit (15e) so gestaltet ist, dass sie in einem Fall, in dem die Erfassungstemperatur (Th1) des ersten Temperatursensors (37) eine Temperatur wird, die größer oder gleich einer ersten Ermittlungstemperatur (Ht1) ist, die erzielt wird, indem zu der durch die Temperatur-Schätzeinheit (15d) geschätzten Nicht-Anheiz-Temperatur (Thk1) eine vorbestimmte Temperatur (Ths) addiert wird, und eine Erfassungstemperatur (Th2) des zweiten Temperatursensors (38) innerhalb einer vorbestimmten Zeitdauer (Ts2) vom Zündstartzeitpunkt (Tk) an um eine vorbestimmte Ermittlungstemperaturdifferenz (Htd) oder mehr erhöht ist und eine Temperatur wird, die größer oder gleich einer vorbestimmten zweiten Ermittlungstemperatur (Ht2) ist, ermittelt, dass die Verbrennungseinheit (35) angeheizt ist.

2. Brennstoffzellensystem (1) nach Anspruch 1,
wobei die zweite Ermittlungstemperatur (Ht2) eine Temperatur ist, die höher als eine Selbstentzündungstemperatur des brennbaren Gases ist und niedriger als eine Aktivierungstemperatur der Reformiereinheit (33) ist.

3. Brennstoffzellensystem (1) nach Anspruch 1 oder 2,
wobei die Verdampfungseinheit (32) und die Reformiereinheit (33) oberhalb der Brennstoffzelle (51) angeordnet sind,
die Verbrennungseinheit (35) eine erste Verbrennungseinheit (35a), die so gestaltet ist, dass sie die Verdampfungseinheit (32) erhitzt, und eine zweite Verbrennungseinheit (35b) aufweist, die so gestaltet ist, dass sie die Reformiereinheit (33) erhitzt,
der erste Temperatursensor (37) in einer der ersten Verbrennungseinheit (35a) und der zweiten Verbrennungseinheit (35b) angeordnet ist und
der zweite Temperatursensor (38) im Inneren von einer der Verdampfungseinheit (32) und der Reformiereinheit (33) angeordnet ist, die von der anderen der ersten Verbrennungseinheit (35a) und der zweiten Verbrennungseinheit (35b) erhitzt wird.

4. Brennstoffzellensystem (1) nach Anspruch 1 oder 2,
wobei die Verdampfungseinheit (32) und die Reformiereinheit (33) oberhalb der Brennstoffzelle (51) angeordnet sind,
die Brennstoffzelle (51) auf eine solche Weise ausgebildet ist, dass zwei Stapel (51a, 51b), in denen Zellen (51a1, 51b1), die die Brennstoffelektrode haben, gestapelt sind, parallel angeordnet sind, sodass sie miteinander elektrisch verbunden sind,
der erste Temperatursensor (37) in der Verbrennungseinheit (35) angeordnet ist, die oberhalb eines der zwei Stapel (51a, 51b) gelegen ist,
der zweite Temperatursensor (38) im Inneren von einer der Verdampfungseinheit (32) und der Reformiereinheit (33) angeordnet ist, die oberhalb des anderen der zwei Stapel (51a, 51b) angeordnet ist.

## Revendications

1. Système de pile à combustible (1) comprenant :
une pile à combustible (51) qui est configurée pour générer un courant électrique au moyen d'un gaz de reformage et d'un gaz oxydant ;
une unité d'évaporation (32) qui est configurée pour générer de la vapeur d'eau à partir de l'eau de reformage ;
une unité de reformage (33) qui est configurée pour générer le gaz de reformage à partir d'une matière première de reformage amenée d'une source d'alimentation (GS) et de la vapeur d'eau amenée de l'unité d'évaporation (32) et amener le gaz de reformage à la pile à combustible (51) ;
une unité de combustion (35) qui est configurée pour brûler du gaz combustible venant d'une électrode de combustion de la pile à combustible (51) au moyen du gaz oxydant et chauffer l'unité d'évaporation (32) et l'unité de reformage (33) entre l'unité d'évaporation (32), l'unité de reformage (33), et la pile à combustible (51) ;
un dispositif de chauffage (35c, 35d) qui comporte une unité de génération de chaleur (35c1, 35d1) pour générer de la chaleur et est configuré pour enflammer le gaz combustible, qui est introduit à l'intérieur de l'unité de combustion (35), par chauffage du gaz combustible au moyen de l'unité de génération de chaleur (35c1, 35d1), pour allumer ainsi l'unité de combustion (35) ;
un premier capteur de température (37) qui est agencé dans l'unité de combustion (35) et est configuré pour détecter une température d'un emplacement dans lequel le premier capteur de température (37) est agencé et la température est augmentée lorsque le dispositif de chauffage (35c, 35d) génère de la chaleur au moyen de l'unité de génération de chaleur (35c1, 35d1) ;
un deuxième capteur de température (38) qui est agencé à l'intérieur d'au moins une parmi l'unité d'évaporation (32) et l'unité de reformage (33) et est configuré pour détecter une température d'un emplacement dans lequel le deuxième capteur de température (38) est agencé ; et
un dispositif de commande (15) qui est configuré pour commander au moins la pile à combustible (51),
dans lequel le dispositif de commande (15) comporte :
une unité de génération de chaleur sans allumage (15b) qui est configurée pour mettre en marche le dispositif de chauffage (35c, 35d) pour générer de la chaleur au moyen de l'unité de génération de chaleur (35c1, 35d1) sans allumage de l'unité de combustion (35) en ne permettant pas au gaz combustible d'être introduit dans l'unité de combustion (35) pendant une opération de démarrage du système de pile à combustible (1),
une unité de calcul de vitesse d'augmentation de température (15c) qui est configurée pour calculer, lorsque l'unité de génération de chaleur (35c1, 35d1) génère de la chaleur après que le dispositif de chauffage (35c, 35d) a été allumé par l'unité de génération de chaleur sans allumage (15b), une vitesse d'augmentation de température (Vt) qui est une vitesse d'augmentation d'une température de détection (Th1) du premier capteur de température (37) dans un cas dans lequel l'unité de combustion (35) n'est pas allumée sur la base de la température de détection (Th1) du premier capteur de température (37),
une unité d'estimation de température (15d) qui est configurée pour estimer, dans un cas dans lequel l'inflammation du gaz combustible est démarrée par le dispositif de chauffage (35c, 35d) pendant l'opération de démarrage du système de pile à combustible (1), une température sans allumage (Thk1), qui est la température de détection (Th1) du premier capteur de température (37) dans un cas dans lequel l'unité de combustion (35) n'est pas allumée, à un point dans le temps après qu'une période de temps (Ts1) prédéterminée s'est écoulée à partir d'un point dans le temps de démarrage d'inflammation (Tk) auquel l'inflammation du gaz combustible est démarrée, sur la base de la vitesse d'augmentation de température (Vt) calculée par l'unité de calcul de vitesse d'augmentation de température (15c), et
une unité de détermination d'allumage (15e) qui est configurée pour déterminer, pendant l'opération de démarrage du système de pile à combustible (1), si l'unité de combustion (35) est allumée ou non, et
dans lequel l'unité de détermination d'allumage (15e) est configurée pour déterminer que l'unité de combustion (35) est allumée dans un cas dans lequel la température de détection (Th1) du premier capteur de température (37) devient une température supérieure ou égale à une première température de détermination (Ht1) obtenue par ajout d'une température prédéterminée (Ths) à la température sans combustion (Thk1) estimée par l'unité d'estimation de température (15d), et une température de détection (Th2) du deuxième capteur de température (38) est augmentée par une différence de température de détermination (Htd) prédéterminée ou plus et devient une température supérieure ou égale à une deuxième température de détermination (Ht2) prédéterminée, pendant une période de temps (Ts2) prédéterminée à partir du point dans le temps de démarrage d'inflammation (Tk).

2. Système de pile à combustible (1) selon la revendication 1,
dans lequel la deuxième température de détermination (Ht2) est une température qui est supérieure à une température d'allumage spontanée du gaz combustible et inférieure à une température d'activation de l'unité de reformage (33).

3. Système de pile à combustible (1) selon la revendication 1 ou 2,
dans lequel l'unité d'évaporation (32) et l'unité de reformage (33) sont agencées au-dessus de la pile à combustible (51),
l'unité de combustion (35) comprend une première unité de combustion (35a) qui est configurée pour chauffer l'unité d'évaporation (32) et une deuxième unité de combustion (35b) qui est configurée pour chauffer l'unité de reformage (33),
le premier capteur de température (37) est agencé dans l'une parmi la première unité de combustion (35a) et la deuxième unité de combustion (35b), et
le deuxième capteur de température (38) est agencé à l'intérieur de l'une parmi l'unité d'évaporation (32) et l'unité de reformage (33) qui est chauffée par l'autre parmi la première unité de combustion (35a) et la deuxième unité de combustion (35b).

4. Système de pile à combustible (1) selon la revendication 1 ou 2,
dans lequel l'unité d'évaporation (32) et l'unité de reformage (33) sont agencées au-dessus de la pile à combustible (51),
la pile à combustible (51) est formée de telle manière que deux empilements (51a, 51b) dans lesquels des piles (51a1, 51b1) présentant l'électrode à combustible sont empilées sont agencés en parallèle pour être connectés électriquement l'un à l'autre,
le premier capteur de température (37) est agencé dans l'unité de combustion (35) située au-dessus d'un des deux empilements (51a, 51b), et
le deuxième capteur de température (38) est agencé à l'intérieur de l'une parmi l'unité d'évaporation (32) et l'unité de reformage (33) qui est agencée au-dessus de l'autre parmi les deux empilements (51a, 51b).
